# EUROPEAN PATENT SPECIFICATION

(11) **EP 3 358 138 B1**
(45) Date of publication and mention of the grant of the patent: **23.06.2021**
(21) Application number: 18155535.0
(22) Date of filing: 07.02.2018
(51) Int. Cl.: F01D 9/04

(54) **PRE-SWIRLER FOR GAS TURBINE**
VORVERWIRBLER FÜR GASTURBINE
DISPOSITIF DE PRÉ-TOURBILLONNEMENT POUR TURBINE À GAZ

(30) Priority: 07.02.2017 KR 20170016989
(43) Date of publication of application: 08.08.2018
(73) Proprietor: Doosan Heavy Industries & Construction Co., Ltd., Seongsan-gu Changwon-si, Gyeongsangnam-do 51711 (KR)
(72) Inventor: KIM, Dong Hwa, 07524 Seoul (KR)
(74) Representative: Ter Meer Steinmeister & Partner

(56) References cited:
- EP-A1- 3 163 028
- GB-A- 2 115 881
- US-A1- 2013 051 996
- US-A1- 2014 348 660

## Description

This application claims priority to Korean Patent Application No. 10-2017-0016989, filed on February 07, 2017.

### BACKGROUND OF THE INVENTION

### Field of the Invention

The present invention relates to a pre-swirler, and more particularly, to a pre-swirler for a gas turbine, including an auxiliary vane between main vanes disposed along a circumferential direction of a pre-swirler housing of a gas turbine to promote stable movement of cooling air.

### Description of the Related Art

In general, as fuel is combusted in a combustion chamber, high temperature combustion gas is generated in a gas turbine. The high-temperature and high-pressure gas expands while flowing along a stator vane row and a turbine rotor blade row that are alternately disposed in a turbine portion, and available power is generated using energy resulting from the expansion.

The initial gas flow of the stator vane row and the blade row is generally maintained at high temperature of 1000 °C or higher. The blade and the vane are vulnerable to the high-temperature gas flow, thus are cooled by cooling air compressed at the upstream side in an engine and then flowing to a turbine member.

In the gas turbine operated as described above, transporting cooling air from an air gap at which an inside of the stator is fixed to a rotor assembly to disperse the cooling air to an inner side of the rotor blade is an important problem. To achieve the purpose as described above, conventionally, an on-board injection has been used.

In particular, compressed air discharged from a compressor flows in a circumferential direction after passing through the on-board injection.

A swirling component is given to the compressed air passing through the on-board injection, such that the cooling air flows to be discharged to the rotating turbine assembly in a tangential direction. An amount and a direction of the cooling air affect effectiveness of cooling capacity of the cooling air and overall performance of the engine.

When an amount of air is too small, the turbine blade is overheated, but when air is excessively supplied, combustion efficiency deteriorates. Thus, it is important to supply an appropriate amount of cooling air. For reference, the on-board injection changes a rotation direction component of the cooling air supplied to the blade, thus is also called swirler.

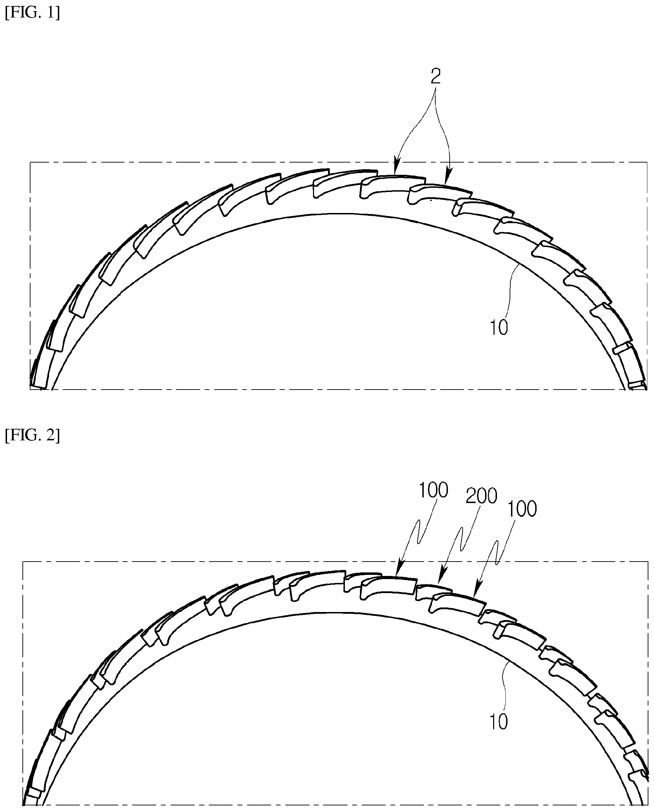

Referring to FIG. 1, a conventional swirler included in a gas turbine will be described.

Referring to FIG. 1, in the conventional swirler, a plurality of vanes 2 are disposed at a predetermined interval at an outer side of a pre-swirler housing 10. The vane 2 is formed in a streamlined airfoil shape, and movement of the cooling air is guided by passing through the vane 2.

The swirler used as described above has a problem that a flow rate, pressure, and temperature required by the turbine are not stably satisfied. In this case, a structure of the swirler needs to be changed or a structure of the vane 2 needs to be changed to secure safety of the cooling air supplied to the turbine.

[Related Document] US Patent Registration No. 9,027,350 (May 12, 2015)

US 2014/348660 A1 describes a blade cascade which has a plurality of blades that are arranged next to each other. A rib is provided between the blades.

GB 2 115 881 A relates to an array of alternate primary and secondary vanes.

US 2013/051996 A1 relates to a transition channel of a turbine unit. One or two splitter vanes are arranged between support ribs.

EP 3 163 028 A1 provides a compressor apparatus that includes: an inner flowpath surface; an outer flowpath surface; an array of stator airfoils extending between the inner and outer flowpath surfaces; and an array of airfoil-shaped splitter vanes extending from at least one of the inner and outer flowpath surfaces, the splitter vanes alternating with the stator airfoils, wherein at least one of a chord dimension of the splitter vanes at the roots thereof and a span dimension of the splitter vanes is less than a corresponding dimension of the stator airfoils.

### SUMMARY OF THE INVENTION

An object of the present invention is to stabilize a relative temperature of a fluid supplied to a blade by increasing a swirl which is a rotational velocity component of cooling air moving through a pre-swirler of a gas turbine.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

The object is solved by the features of the independent claim. Preferred embodiments are given in the dependent claims.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating a conventional swirler;
FIG. 2 is a perspective view illustrating a pre-swirler for a gas turbine according to an embodiment of the present invention;
FIG. 3 is a diagram illustrating a main vane and an auxiliary vane according to an embodiment of the present invention;
FIGS. 4 and 5 are diagrams illustrating a main vane according to an embodiment of the present invention;
FIG. 6 is a diagram illustrating an auxiliary vane according to an embodiment of the present invention;
FIG. 7 is a graph illustrating a swirl ratio according to a position of the auxiliary vane according to an embodiment of the present invention;
FIG. 8 is a graph illustrating total pressure loss according to a position of the auxiliary vane according to an embodiment of the present invention;
FIG. 9 is a perspective view illustrating a pre-swirler for a gas turbine according to another exemplary embodiment not forming part of the invention;
FIG. 10 is a diagram illustrating first and second main vanes and first and second auxiliary vanes according to another exemplary embodiment not forming part of the invention; and
FIG. 11 is a diagram illustrating the second auxiliary vane according to another embodiment exemplary embodiment not forming part of the invention.

### DESCRIPTION OF SPECIFIC EMBODIMENTS

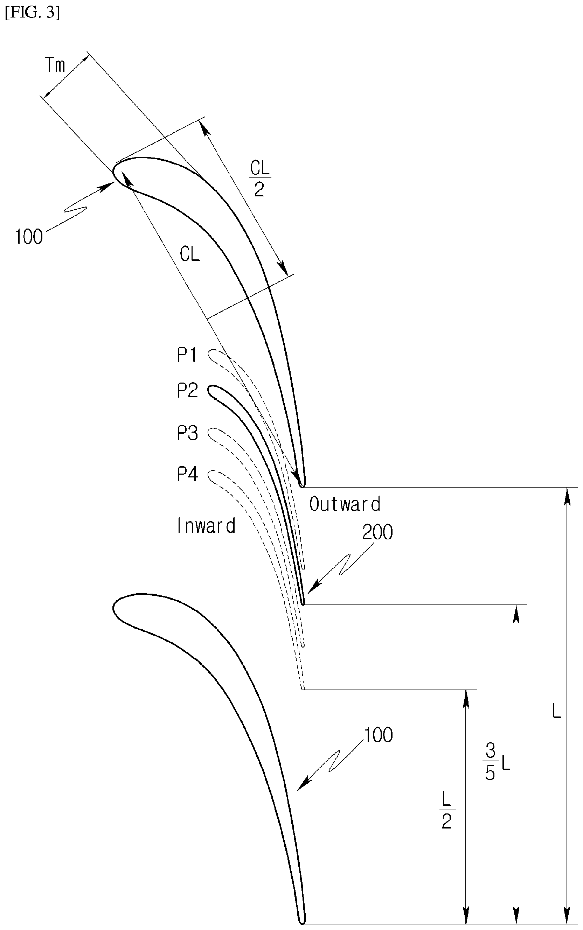

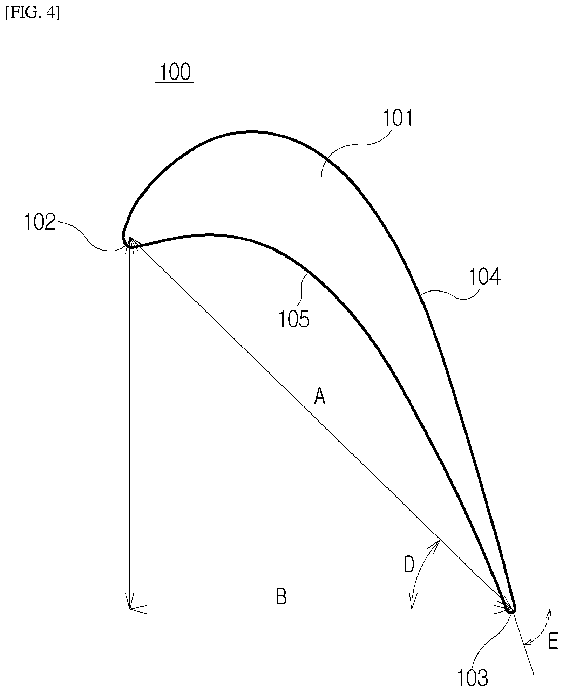

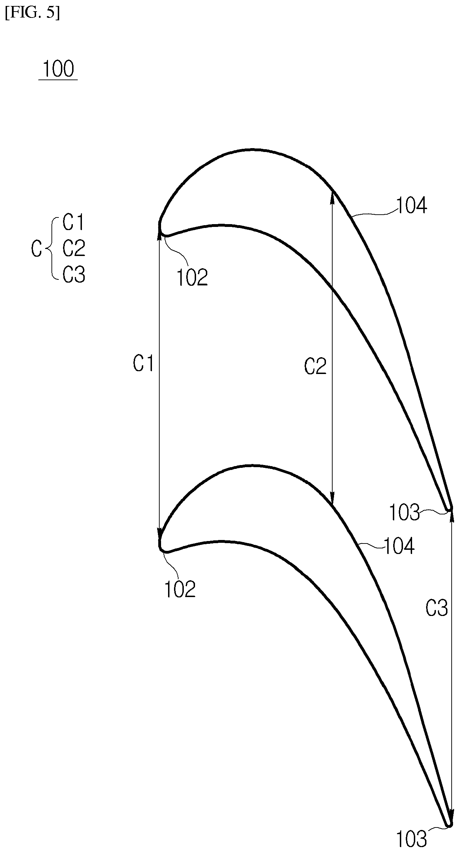

A pre-swirler for a gas turbine according to an embodiment of the present invention will be described with reference to the accompanying drawings. FIG. 2 is a perspective view illustrating a pre-swirler for a gas turbine according to an embodiment of the present invention, FIG. 3 is a diagram illustrating a main vane and an auxiliary vane according to an embodiment of the present invention, and FIGS. 4 and 5 are diagrams illustrating main vanes according to an embodiment of the present invention.

Referring to FIGS. 2 to 5, the pre-swirler for a gas turbine according to a present embodiment is configured as a dual vane type. For example, the pre-swirler for a gas turbine includes a plurality of main vanes 100 spaced apart from each other at a predetermined interval along a circumferential direction of a pre-swirler housing 10 provided in a compressor of the gas turbine, and an auxiliary vane 200 disposed between the main vanes 100 spaced apart from each other and having a size smaller than that of the main vane 100.

The main vane 100 may be formed, for example, in an airfoil shape, and may include a first chord length A which is a shortest length connecting from a leading edge 102 formed at a tip end portion (left side in the drawing) of a vane body 101 to a trailing edge 103 formed at a rear end portion (lower right side in the drawing) thereof. An overall shape of the vane body101 is rounded to be streamlined from the leading edge 102 to the trailing edge 103.

Further, the main vane 100 includes an intake surface 104 rounded outwardly at an upper surface of the vane body 101, a pressure surface 105 rounded inwardly at a lower surface of the vane body 101, a first axial chord B formed between the leading edge 102 and the trailing edge 103, a first stagger angle D formed between the first chord length A and the first axial chord B, and a first turning angle E formed between a movement direction of the cooling air passing through the trailing edge 103 and a virtual vertical line drawn from the trailing edge 103. Here, the main vane 100 is indicated by a bold line and the virtual vertical line is indicated by a thin line.

The vane body 101 is extended in a shape illustrated in the drawings from the leading edge 102 contacting the cooling air toward the trailing edge 103, and the intake surface 104 and the pressure surface 105 are extended to be rounded as illustrated in the drawings.

The first chord length A means a length from the leading edge 102 to the trailing edge 103, which is indicated by a solid line.

Further, the first axial chord B may be formed when a virtual first vertical line is extended downward from the leading edge 102 and a virtual horizontal line is extended from the trailing edge 103 toward the first vertical line in the drawings.

If the length of the first axial chord B is increased, a position of the trailing edge 103 may be moved to the right in a horizontal direction from the current position, and the shape of the intake surface 104 and the pressure surface 105 described above may be changed as the trailing edge 103 moves.

The drawings as illustrated in FIGS. 2 to 5 represent an optimum shape of the the main vane 100. According to an embodiment of the present invention, since the movement direction of the cooling air may be changed according to the length of the first axial chord B, it is preferable that the first axial chord B may be extended in consideration of the plurality of main vanes 100 and the auxiliary vane 200 to be described later.

The first stagger angle D of the main vane 100 may be maintained in a range of 50° to 60°. As an example, the first stagger angle D may be 58°, and the first turning angle E may be 80° or more.

The plurality of main vanes 100 are disposed at a predetermined interval in the circumferential direction of the pre-swirler housing 10, and the main vanes 100 maintain a span C therebetween.

The span C may further include a first span C1 between the leading edges of the main vane 100 spaced apart from each other, a second span C2 between the intake surfaces 104 of the main vane 100 spaced apart from each other, and a third span C3 between the trailing edges 103 of the main vanes 100 spaced apart from each other are maintained.

The span C serves as a passage through which the cooling air moves, and in the present embodiment, the span illustrated in the drawings is maintained in consideration of a position of the main vane 100 with respect to the auxiliary vane 200 and an interval between the main vane 100 and the auxiliary vane 200.

The span between the main vanes 100 spaced apart from each other according to the present embodiment may be maintained to be 70 mm or less, and as a swirl value is increased in a rotation direction of the cooling air, unnecessary flow caused by secondary flow loss can be minimized, thereby maintaining stable movement of the cooling air.

The first stagger angle D of the main vane 100 may be maintained in a range of 50° to 60°. As an example, the first stagger angle D may be 58°, and the first turning angle E may be 80° or more.

When a spacing distance between the main vanes 100 is L, the auxiliary vane 200 may be positioned at a position of L/2, according to an embodiment which does not fall under the scope of the invention. According to simulation results of the cooling air movement, the position may minimize pressure loss at an inlet where the main vane 100 is positioned, and minimize unnecessary secondary flow loss of the cooling air. For reference, the spacing distance L corresponds to a length measured based on the trailing edges of the main vanes 100 spaced apart from each other.

The auxiliary vane positioned between the main vanes 100 facing each other illustrated in FIG. 3 may be disposed at four positions. A first position indicates an auxiliary vane positioned at a P1 position illustrated in FIG. 3, a second position indicates an auxiliary vane positioned at a P2 position, a third position indicates an auxiliary vane positioned at a P3 position, and a fourth position indicates an auxiliary vane positioned at a P4 position.

For reference, an optimum position of the auxiliary vane 200 according to the present invention corresponds to the P2 position indicated by a solid line.

In the case in which the auxiliary vane 200 is positioned between the main vanes 100, it is possible to decrease movement of the fluid stopping the movement of the cooling air, and minimize unnecessary flow caused by secondary flow loss while the cooling air moves to the auxiliary vane 200 by passing through the main vane 100, thereby maintaining stable movement of the cooling air.

According to the present invention, when a spacing distance between the main vanes 100 is L, the auxiliary vane 200 is positioned at a position of 3L/5, based on the P2 position, in order to maintain the above-described operational effects.

According to the present embodiment, when the first chord length A connecting from the leading edge 102 to the trailing edge 103 is CL, the auxiliary vane is positioned at a position of CL/2.

The position may correspond to an optimum position when the auxiliary vane 200 is positioned between the main vanes 100, and corresponds to a position at which the auxiliary vane 200 positioned between the main vanes 100 may stably guide movement of the cooling air while minimizing the problem caused by secondary flow loss.

According to the present embodiment, when the first chord length connecting from the leading edge 102 to the trailing edge 103 is CL, the auxiliary vane may be positioned at a further back position than the position of CL/2.

The position corresponds to an optimum position when the auxiliary vane 200 is positioned between the main vanes 100, and corresponds to a position at which the auxiliary vane 200 may stably guide movement of the cooling air and minimize the problem caused by secondary flow loss.

The auxiliary vane 200 is formed to have a thickness thinner than a maximum thickness of the main vane 100. For example, when the maximum thickness of the main vane 100 is Tm, the auxiliary vane 200 is formed to have a thickness of 2Tm/5. The thickness of the auxiliary vane 200 may be changed depending on the thickness of the main vane 100.

At least one auxiliary vane 200 according to the present embodiment is disposed between the main vanes 100, preferably at the above-described position. However, a plurality of auxiliary vanes may be disposed according to an embodiment of the present invention.

The trailing edge 203 of the auxiliary vane 200 may be positioned further inward than the position at which the trailing edge 103 of the main vane 100 is formed.

The auxiliary vane 200 is provided to stably guide movement of the cooling air introduced through a space between the main vanes 100. Therefore, the trailing edge 203 of the auxiliary vane 200 may be positioned further inward than the position of the trailing edge 103 of the main vane 100 than the trailing edge 203 of the auxiliary vane 200 is positioned further outward than the position of the trailing edge 103 of the main vane 100, in terms of maintaining safety of the cooling air.

The cooling air moves along the intake surface 104 and the pressure surface 105 of the main vane 100, and then is separated at the position of the trailing edge 103 to move in the movement direction. The trailing edge 203 of the auxiliary vane 200 is positioned at the above-described position to facilitate the movement of the cooling air at the position of the trailing edge 103.

The main vane 100 may be disposed such that it is inclined in a tangential direction when viewed at the front of the pre-swirler housing 10, and in this case, when moving along the main vane 100, movement safety of the cooling air may be improved, and a vortex generation can be minimized.

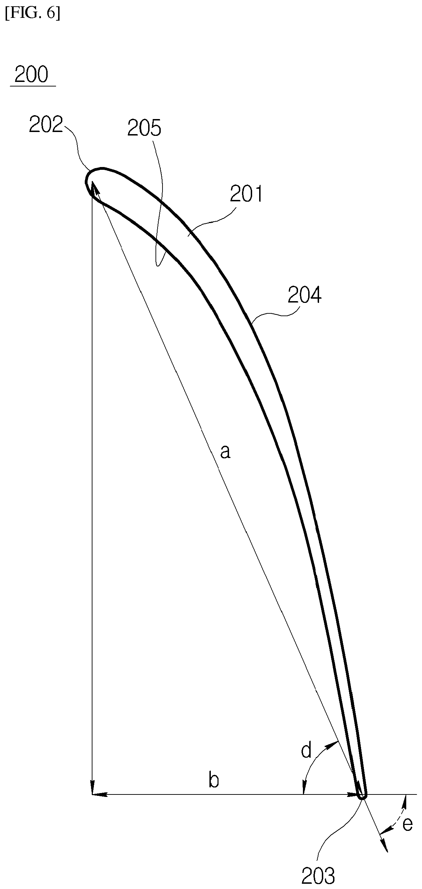

Referring to FIG. 6, an auxiliary vane 200 according to an embodiment of the present disclosure is positioned between a plurality of main vanes 100 spaced apart from each other at a predetermined interval along a circumferential direction of a pre-swirler housing 10 provided in a compressor of the gas turbine.

Further, a second chord length a which is a shortest length connecting from a leading edge 202 formed at a tip end portion of a vane body 201 to a trailing edge 203 formed at a rear end portion thereof, an intake surface 204 rounded outwardly at an upper surface of the vane body 201, and a pressure surface rounded inwardly at a lower surface of the vane body 201 are formed in the auxiliary vane 200.

Further, the auxiliary vane 200 includes a second axial chord b which can be defined as a horizontal length between the leading edge 202 and the trailing edge 203, a second stagger angle d formed between the second chord length a and the second axial chord b, and a second turning angle e formed between a movement direction of the cooling air passing through the trailing edge 203 and a virtual vertical line drawn from the trailing edge 203.

The vane body 201 is extended in a shape illustrated in the drawings from the leading edge 202 contacting the cooling air toward the trailing edge 203, and the intake surface 204 and the pressure surface 205 are extended to be rounded as illustrated in the drawings.

The second chord length a means a length from the leading edge 202 to the trailing edge 203, which is indicated by a solid line.

Further, the second axial chord b may be formed when a virtual first vertical line is extended downward from the leading edge 202 and a virtual horizontal line is extended from the trailing edge 203 toward the first vertical line in the drawings.

If the length of the second axial chord b is increased, a position of the trailing edge 203 may be moved to the right in a horizontal direction from the current position, and the shape of the intake surface 204 and the pressure surface 205 described above may be changed as the trailing edge 203 moves.

Since the movement direction of the cooling air is changed according to the length of the second axial chord b, the second axial chord b may be extended in the form illustrated in the drawings.

The second stagger angle d of the auxiliary vane 200 is maintained in a range of 60° to 70°, and the angle is maintained in the above range in consideration of a disposition relationship between the main vane 100 and the auxiliary vane 200.

In this case, while the cooling air moves by passing through the auxiliary vane 200, unnecessary flow caused by secondary flow loss can be minimized, thereby maintaining stable movement of the cooling air.

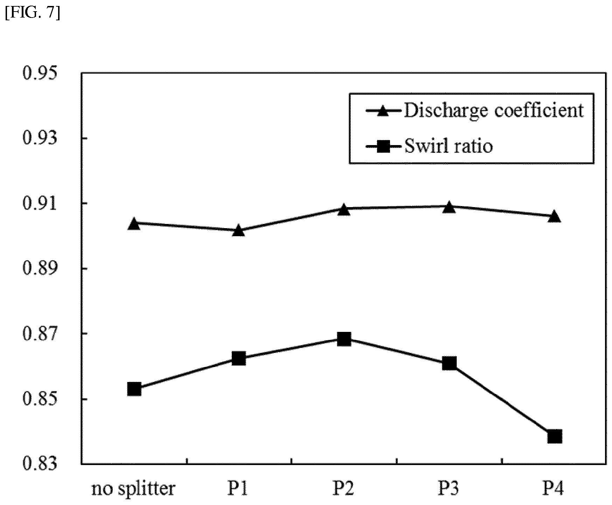

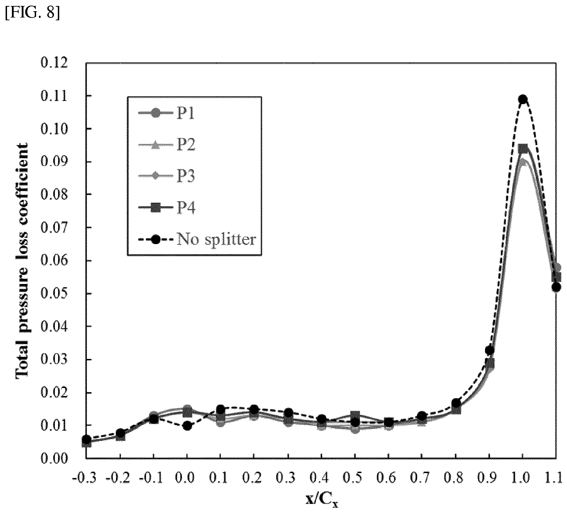

FIG. 7 is a graph illustrating a swirl ratio according to a position of the auxiliary vane according to an embodiment of the present invention, and FIG. 8 is a graph illustrating total pressure loss according to a position of the auxiliary vane. The auxiliary vane positioned between the main vanes facing each other as illustrated in FIG. 3 may be disposed at four positions. P1 indicates the auxiliary vane positioned at the P1 position, P2 indicates the auxiliary vane positioned at the P2 position, P3 indicates the auxiliary vane positioned at the P3 position, and P4 indicates the auxiliary vane positioned at the P4 position.

Referring to FIGS. 7 and 8, the auxiliary vane 200 according to an embodiment of the present invention may be positioned at one or two of the P1 to P4 positions, as illustrated in FIG. 3.

When comparing swirl ratios of the auxiliary vanes 200 disposed at the four positions as described above, it may be appreciated that the auxiliary vane 200 positioned at the P2 position has the best swirl ratio. The auxiliary vanes positioned at the P1 position and the P3 position have the second best swirl ratio. A discharge coefficient is also illustrated in FIG. 7.

Referring to FIG. 8, total pressure loss in the auxiliary vane 200 is depicted according to the P1 position to the P4 position, and it may be appreciated that although the total pressure loss is changed according to the P1 position to the P4 position, the total pressure loss is decreased when the auxiliary vane 200 is provided.

A pre-swirler for a gas turbine according to another embodiment of the present invention will be described with reference to the accompanying drawings.

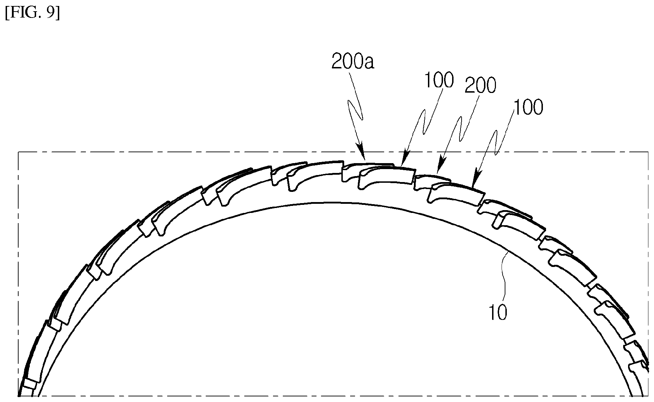

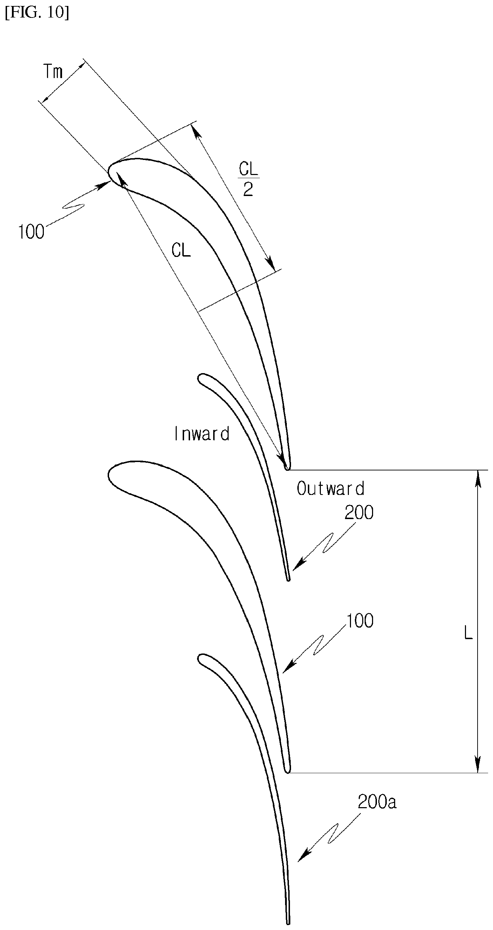

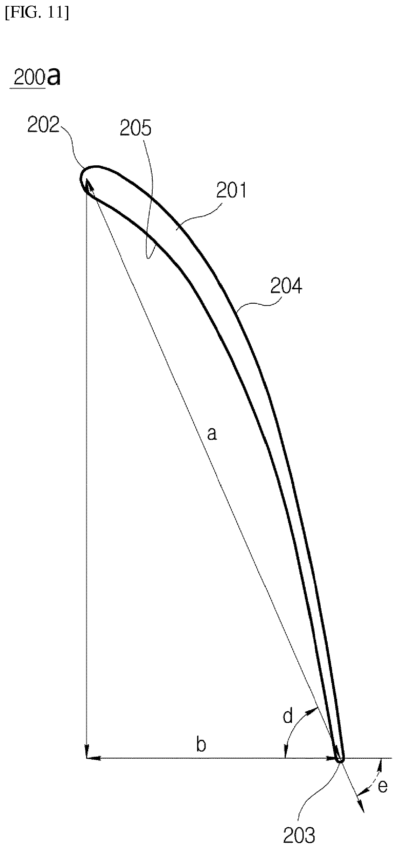

Referring to FIGS. 9 to 11, which concern an embodiment which does not fall under the scope of the claims, a first main vane 100 and a first auxiliary vane 200 are disposed in a circumferential direction of a pre-swirler housing 10, and the first main vane 100 and the first auxiliary vane 200 spaced apart from each other are disposed in pair, and adjacently thereto, a second main vane 100 and a second auxiliary vane 200a are disposed in pair. Further, the disposition relationship is alternately repeated in the circumferential direction of the pre-swirler housing 10.

In the case of the disposition relationship as described above, stability of guiding the cooling air movement may be improved, and the loss may be decreased, such that unnecessary flow caused by secondary flow loss may be minimized, resulting in the stable movement of the cooling air.

To this end, the first main vane 100 is formed, for example, in an airfoil shape, and includes a first code length A which is a shortest length connecting from a leading edge 102 formed at a tip end portion (left side in the drawing) of a vane body 101 (see FIG. 4) to a trailing edge 103 formed at a rear end portion (lower right side in the drawing) thereof. An overall shape of the vane body 101 is rounded to be streamlined from the leading edge 102 to the trailing edge.

Further, in a similar manner in FIG. 4, the main vane 100 includes an intake surface 104 rounded outwardly at an upper surface of the vane body 101, a pressure surface rounded inwardly at a lower surface of the vane body 101, a first axial chord B formed between the leading edge 102 and the trailing edge 103, a first stagger angle D formed between the first chord length A and the first axial chord B, and a first turning angle E formed between a movement direction of the cooling air passing through the trailing edge 103 and a virtual vertical line drawn from the trailing edge 103. Here, the first main vane 100 is indicated by a bold line and the virtual vertical line is indicated by a thin line.

The vane body 101 is extended in a shape illustrated in the drawings from the leading edge 102 contacting the cooling air toward the trailing edge 103, and the intake surface 104 and the pressure surface 105 are extended to be rounded as illustrated in the drawings.

The first chord length A means a length from the leading edge 102 to the trailing edge 103, which is indicated by a solid line.

Further, the first axial chord B may be formed when a virtual first vertical line is extended downward from the leading edge 102 and a virtual horizontal line is extended from the trailing edge 103 toward the first vertical line in the drawings. The first axial chord B may be the horizontal length between the virtual first vertical line extended downward from the leading edge 102 and the trailing edge 103.

If the length of the first axial chord B is increased, a position of the trailing edge 103 may be moved to the right in a horizontal direction from the current position, and the shape of the intake surface 104 and the pressure surface 105 described above may be changed as the trailing edge 103 moves.

Since the movement direction of the cooling air may be changed according to the length of the first axial chord B, the first axial chord B may be extended in the form illustrated in the drawings in consideration of the plurality of first main vanes 100 and the first auxiliary vane 200 to be described later.

The first stagger angle D of the first main vane 100 is maintained in a range of 50° to 60°. As an example, the first stagger angle D may be 58°, and the first turning angle E may be 80° or more.

When a spacing distance between the first main vanes 100 is L, a position of the first auxiliary vane 200 is at a position of L/2. According to the simulation results of the cooling air movement, the position may minimize pressure loss at an inlet where the first main vane 100 is positioned, and minimize unnecessary secondary flow loss of the cooling air. The spacing distance L corresponds to a length measured based on the trailing edges of the first main vanes 100 spaced apart from each other.

An optimum position of the first auxiliary vane 200 according to the present embodiment corresponds to the position indicated by a solid line. The first auxiliary vane 200 may also be positioned at different positions other than the position.

In the case in which the first auxiliary vane 200 is positioned between the first main vanes 100, it is possible to decrease the movement of the fluid stopping the movement of the cooling air, and minimize unnecessary flow caused by secondary flow loss while the cooling air moves to the first auxiliary vane 200 by passing through the first main vane 100, thereby maintaining stable movement of the cooling air.

According to an embodiment of the present invention, when the first chord length A connecting from the leading edge 102 to the trailing edge 103 is CL, the auxiliary vane is positioned at a position of CL/2.

The position may correspond to an optimum position when the first auxiliary vane 200 is positioned between the first main vanes 100, and corresponds to a position at which the first auxiliary vane 200 positioned between the first main vanes 100 may stably guide movement of the cooling air and minimize the problem caused by secondary flow loss.

When the first chord length connecting from the leading edge 102 to the trailing edge 103 is CL, the auxiliary vane may be positioned at a further back position than the position of CL/2.

The first auxiliary vane 200 is formed to have a thickness thinner than a maximum thickness of the first main vane 100. For example, when the maximum thickness of the first main vane 100 is Tm, the first auxiliary vane 200 is formed to have a thickness of 2Tm/5. The thickness of the first auxiliary vane 200 may be changed depending on the thickness of the first main vane 100.

At least one first auxiliary vane 200 according to the present embodiment is disposed between the first main vanes 100. Most preferably, one first auxiliary vane 200 is disposed at the above-described position. However, in some cases, a plurality of first auxiliary vanes may be disposed.

In addition, the trailing edge 203 of the first auxiliary vane 200 may be positioned further inward than the position at which the trailing edge 103 of the first main vane 100 is formed.

The first auxiliary vane 200 is provided to stably guide movement of the cooling air introduced through a space between the first main vanes 100. Therefore, it is desirable that the position of the trailing edge 203 of the first auxiliary vane 200 is positioned further inward than the position of the trailing edge 103 of the first main vane 100 than the position of the trailing edge 203 of the first auxiliary vane 200 is positioned further outward than the position of the trailing edge 103 of the first main vane 100, in terms of maintaining safety of the cooling air. The cooling air moves along the intake surface 104 and the pressure surface 105 of the first main vane 100, and then is separated at the position of the trailing edge 103 to move in the movement direction. The trailing edge 203 of the first auxiliary vane 200 is positioned at the above-described position to facilitate the movement of the cooling air at the position of the trailing edge 103.

The first main vane 100 may be disposed such that the first main vane 100 is inclined in a tangential direction when viewed at the front of the pre-swirler housing 10, and in this case, when moving along the first main vane 100, movement safety of the cooling air may be improved, and unnecessary generation of a vortex may be minimized.

Referring to FIGS. 9 to 11, the second auxiliary vane 200a according to an embodiment of the present invention is positioned adjacent to a plurality of second main vanes 100 spaced apart from each other along the circumferential direction of the pre-swirler housing 10 provided in a compressor of the gas turbine. The second auxiliary vane 200a is formed to have a size smaller than that of the second main vane 100. A configuration of the second main vane 100 is the same as that of the first main vane 100, thus detailed description therefor will be omitted.

Further, a second chord length a which is a shortest length connecting from a leading edge 202 formed at a tip end portion of a vane body 201 to a trailing edge 203 formed at a rear end portion thereof, an intake surface 204 rounded outwardly at an upper surface of the vane body 201, and a pressure surface rounded inwardly at a lower surface of the vane body 201 are formed.

Further, the second auxiliary vane 200a includes a second axial chord b formed between the leading edge 202 and the trailing edge 203, a second stagger angle d formed between the second chord length a and the second axial chord b, and a second turning angle e formed between the movement direction of the cooling air passing through the trailing edge 203 and a virtual vertical line drawn from the trailing edge 203.

The vane body 201 is extended in a shape illustrated in the drawings from the leading edge 202 contacting the cooling air toward the trailing edge 203, and the intake surface 204 and the pressure surface 205 are extended to be rounded as illustrated in the drawings.

The second chord length a means a length from the leading edge 202 to the trailing edge 203, which is indicated by a solid line.

Further, the second axial chord b may be formed when a virtual first vertical line is extended downward from the leading edge 202 and a virtual horizontal line is extended from the trailing edge 203 toward the first vertical line in the drawings.

If the length of the second axial chord b is increased, a position of the trailing edge 203 may be moved to the right in a horizontal direction from the current position, and the shape of the intake surface 204 and the pressure surface 205 described above may be changed as the trailing edge 203 moves.

Since the movement direction of the cooling air is changed according to the length of the second axial chord b, it is preferable that the second axial chord b is extended in the form illustrated in the drawings.

When the second chord length a of the second auxiliary vane 200a is 1, the first chord length A of the main vane 100 is extended to be 1.5 to 1.56 times longer than the second chord length a. In consideration of a size of the main vane 100 and a size of the second auxiliary vane 200a, respectively, the ratio described above is maintained to minimize unnecessary flow caused by secondary flow loss and maintain stable movement of the cooling air.

The second axial chord b of the second auxiliary vane 200a is extended to a length corresponding to a half of the first axial chord B of the main vane 100. The second axial chord b becomes smaller in proportion to the size of the second auxiliary vane 200a, and according to the present embodiment, the second axial chord b is extended to a length of 1/2 of the first axial chord B of the main vane 100.

In this case, the ratio is maintained in order to minimize the unnecessary flow caused by secondary flow loss that may occur due to the movement of the cooling air and to maintain stable movement of the cooling air.

The second stagger angle d of the second auxiliary vane 200a is maintained in a range of 60° to 70°, and the angle is maintained in the above range in consideration of a disposition relationship between the main vane 100 and the second auxiliary vane 200a.

In this case, while the cooling air moves by passing through the second auxiliary vane 200a, the unnecessary flow caused by secondary flow loss may be minimized, thereby maintaining stable movement of the cooling air.

The first turning angle E of the main vane 100 and the second turning angle e of the second auxiliary vane 200a according to an embodiment of the present invention may be identical. The first and second turning angles E and e each determine a movement direction of the cooling air after passing through the main vane 100 and the second auxiliary vane 200a, and when the main vane 100 and the second auxiliary vane 200a have the same angle, the movement directions of the cooling air coincide with each other.

The cooling air moves along the surfaces of the main vane 100 and the second auxiliary vane 200a, and when the first and second turning angles E and e are equal to each other, secondary loss of the cooling air or loss caused by a vortex generation may be minimized, and movement may be stably guided.

According to the embodiments of the present invention, it is possible to change swirling of cooling air supplied to the blade by increasing a swirl value which is a rotational velocity component of the cooling air moving through the pre-swirler of the gas turbine and maintain stable movement of the cooling air by decreasing flow resistance of the cooling air passing through the main vane and the auxiliary vane.

According to the embodiments of the present invention, it is possible to minimize unnecessary flow caused by secondary flow loss of the cooling air passing through the per-swirler and minimize unnecessary generation of a vortex.

## Claims

1. A pre-swirler for a compressor of a gas turbine, comprising:
a plurality of first main vanes (100) spaced apart from each other at a predetermined interval along a circumferential direction of a pre-swirler housing (10), wherein a spacing distance between trailing edges (103) of adjacent first main vanes (100) is L; and
a plurality of first auxiliary vanes (200) disposed between the plurality of first main vanes (100) spaced apart from each other and having a size smaller than that of the plurality of first main vanes (100), wherein a first auxiliary vane (200) of the plurality of first auxiliary vanes (200) is positioned between each pair of adjacent first main vanes (100) and wherein trailing edges (103, 203) of the first main vanes (100) and the first auxiliary vanes (200) are at same axial plane;
wherein each first main vane (100) of the plurality of first main vanes (100) includes a first chord length (A) which is a shortest length connecting from a leading edge formed at a tip end portion of a vane body (101) to a trailing edge (103) formed at a rear end portion of the vane body (101), an intake surface (104) rounded outwardly at a first surface of the vane body (101), a pressure surface (105) rounded inwardly at a second surface of the vane body (101) opposite the first surface, a first axial chord (B) being the axial length between the leading edge (102) and the trailing edge (103), and a first stagger angle (D) formed between the first chord length (A) and the first axial chord (B),
**characterised in that**, for each first auxiliary vane (200) positioned between the pair of adjacent first main vanes (100), a trailing edge (203) of the first auxiliary vane (200) is positioned between adjacent first main vanes (100) at a position of 3L/5 from the trailing edge (103) of the first main vane (100) facing a pressure surface (205) of the first auxiliary vane (200).

2. The pre-swirler for a gas turbine of claim 1, wherein the plurality of first main vanes (100) are inclined in a tangential direction when viewed at the front of the pre-swirler housing (10).

3. The pre-swirler for a gas turbine of any one of claims 1 to 2, wherein when a maximum thickness of the plurality of first main vanes (100) is Tm, the plurality of first auxiliary vanes (200) are formed to have a maximum thickness of 2Tm/5.

4. The pre-swirler for a gas turbine of any one of claims 1 to 3, wherein a span between the plurality of first main vanes (100) spaced apart from each other is 70 mm or less.

5. The pre-swirler for a gas turbine of any one of claims 1 to 4, wherein the first stagger angle (D) of the plurality of first main vanes (100) is maintained in a range of 50° to 60°.

6. The pre-swirler for a gas turbine of claim 1,
wherein the first auxiliary vanes (200) include a second chord length (a) which is a shortest length connecting from a leading edge (102) formed at a tip end portion of a vane body (201) rounded to be streamlined to a trailing edge (203) formed at a rear end portion of the vane body (201), an intake surface (204) rounded outwardly at a first surface of the vane body (201), a pressure surface (205) rounded inwardly at a second surface of the vane body (201) opposite the first surface, a second axial chord (b) being the axial length between the leading edge (202) and the trailing edge (203), a second stagger angle (d) formed between the second chord length (a) and the second axial chord (b).

7. The pre-swirler for a gas turbine of claim 1, further comprising
a second main vane (100) positioned between the first main vanes (100) spaced apart from each other; and
a second auxiliary vane (200a) positioned adjacent to the second main vane (100) and formed to have a size smaller than that of the second main vane (100),
wherein the second main vane (100) includes the first chord length (A) which is a shortest length connecting from a leading edge (102) formed at a tip end portion of a vane body (101) to a trailing edge (103) formed at a rear end portion of the vane body (101), an intake surface (104) rounded outwardly at an upper surface of the vane body (101), a pressure surface (105) rounded inwardly at a lower surface of the vane body (201), the first axial chord (B) being the axial length between the leading edge (102) and the trailing edge (103), and the first stagger angle (D) formed between the first chord length (A) and the first axial chord (A), and
wherein the second auxiliary vane (200a) includes a second chord length (a) which is a shortest length connecting from a leading edge (202) formed at a tip end portion of a vane body (201) to a trailing edge (203) formed at a rear end portion of the vane body (201), an intake surface (204) rounded outwardly at a first surface of the vane body (201), a pressure surface (205) rounded inwardly at a second surface of the vane body (201) opposite the first surface, a second axial chord (b) being the axial length between the leading edge (202) and the trailing edge (203), and a second stagger angle (d) formed between the second chord length (a) and the second axial chord (b).

8. The pre-swirler for a gas turbine of claim 7, wherein the first chord length (A) is extended to be 1.5 to 1.56 times longer than the second chord length (a).

9. The pre-swirler for a gas turbine of any one of claims 7 to 8, wherein the second axial chord (b) is extended to a length corresponding to a half of a length of the first axial chord (B).

## Patentansprüche

1. Vorverwirblungsvorrichtung für einen Kompressor einer Gasturbine, die Folgendes umfasst:
mehrere erste Hauptleitschaufeln (100), die mit einem vorbestimmten Intervall entlang einer Umfangsrichtung eines Vorverwirblungsvorrichtungsgehäuse (10) voneinander beabstandet sind, wobei ein Abstand zwischen Hinterkanten (103) benachbarter erster Hauptleitschaufeln (100) L ist; und
mehrere erste Hilfsleitschaufeln (200), die zwischen den mehreren ersten Hauptleitschaufeln (100) voneinander beabstandet angeordnet sind und eine Größe aufweisen, die kleiner ist als die der mehreren ersten Hauptleitschaufeln (100), wobei eine erste Hilfsleitschaufel (200) der mehreren ersten Hilfsleitschaufeln (200) zwischen jedem Paar benachbarter erster Hauptleitschaufeln (100) positioniert ist und wobei sich die Hinterkanten (103, 203) der ersten Hauptleitschaufeln (100) und der ersten Hilfsleitschaufeln (200) auf derselben axialen Ebene befinden;
wobei jede erste Hauptleitschaufel (100) der mehreren ersten Hauptleitschaufeln (100) eine erste Sehnenlänge (A), die eine kürzeste Länge ist, die von einer Vorderkante, die an einem Spitzenendabschnitt eines Leitschaufelkörpers (101) gebildet ist, zu einer Hinterkante (103), die an einem hinteren Endabschnitt des Leitschaufelkörpers (101) gebildet ist, führt, eine Saugfläche (104), die an einer ersten Oberfläche des Leitschaufelkörpers (101) nach außen abgerundet ist, eine Druckfläche (105), die an einer zweiten Oberfläche des Leitschaufelkörpers (101) gegenüber der ersten Oberfläche nach innen abgerundet ist, eine erste axiale Sehne (B), die der axialen Länge zwischen der Vorderkante (102) und der Hinterkante (103) entspricht, und einen ersten Staffelungswinkel (D), der zwischen der ersten Sehnenlänge (A) und der ersten axialen Sehne (B) gebildet ist, enthält,
**dadurch gekennzeichnet, dass** für jede erste Hilfsleitschaufel (200), die zwischen dem Paar benachbarter erster Hauptleitschaufeln (100) positioniert ist, eine Hinterkante (203) der ersten Hilfsleitschaufel (200) zwischen benachbarten ersten Hauptleitschaufeln (100) an einer Position, die sich 3L/5 von der Hinterkante (103) der ersten Hauptleitschaufel (100) befindet, einer Druckfläche (205) der ersten Hilfsleitschaufel (200) zugewandt positioniert ist.

2. Vorverwirblungsvorrichtung für eine Gasturbine nach Anspruch 1, wobei die mehreren ersten Hauptleitschaufeln (100), von der Vorderseite des Vorverwirblungsvorrichtungsgehäuses (10) betrachtet, in eine tangentiale Richtung geneigt sind.

3. Vorverwirblungsvorrichtung für eine Gasturbine nach Anspruch 1 oder 2, wobei dann, wenn eine maximale Dicke der mehreren ersten Hauptleitschaufeln (100) Tm ist, die mehreren ersten Hilfsleitschaufeln (200) derart gebildet sind, dass sie eine maximale Dicke von 2Tm/5 aufweisen.

4. Vorverwirblungsvorrichtung für eine Gasturbine nach einem der Ansprüche 1 bis 3, wobei ein Abstand zwischen den mehreren ersten Hauptleitschaufeln (100), die voneinander beabstandet sind, 70 mm oder weniger beträgt.

5. Vorverwirblungsvorrichtung für eine Gasturbine nach einem der Ansprüche 1 bis 4, wobei der erste Staffelungswinkel (D) der mehreren ersten Hauptleitschaufeln (100) in einem Bereich von 50° bis 60° gehalten wird.

6. Vorverwirblungsvorrichtung für eine Gasturbine nach Anspruch 1, wobei die ersten Hilfsleitschaufeln (200) eine zweite Sehnenlänge (a), die eine kürzeste Länge ist, die von einer Vorderkante (102), die an einem Spitzenendabschnitt eines Leitschaufelkörpers (201) gebildet ist, der abgerundet ist, so das er stromlinienförmig ist, zu einer Hinterkante (203), die an einem hinteren Endabschnitt des Leitschaufelkörpers (201) gebildet ist, führt, eine Saugfläche (204), die an einer ersten Oberfläche des Leitschaufelkörpers (201) nach außen abgerundet ist, eine Druckfläche (205), die an einer zweiten Oberfläche des Leitschaufelkörpers (201) gegenüber der ersten Oberfläche nach innen abgerundet ist, eine zweite axiale Sehne (b), die der axialen Länge zwischen der Vorderkante (202) und der Hinterkante (203) entspricht, und einen zweiten Staffelungswinkel (d), der zwischen der zweiten Sehnenlänge (a) und der zweiten axialen Sehne (b) gebildet ist, enthält.

7. Vorverwirblungsvorrichtung für eine Gasturbine nach Anspruch 1, die ferner Folgendes umfasst:
eine zweite Hauptleitschaufel (100), die zwischen den ersten Hauptleitschaufeln (100), die voneinander beabstandet sind, positioniert ist; und
eine zweite Hilfsleitschaufel (200a), die neben der zweiten Hauptleitschaufel (100) positioniert ist und derart gebildet ist, dass sie eine Größe aufweist, die kleiner ist als die der zweiten Hauptleitschaufel (100),
wobei die zweite Hauptleitschaufel (100) die erste Sehnenlänge (A), die eine kürzeste Länge ist, die von einer Vorderkante (102), die an einem Spitzenendabschnitt eines Leitschaufelkörpers (101) gebildet ist, zu einer Hinterkante (103), die an einem hinteren Endabschnitt des Leitschaufelkörpers (101) gebildet ist, führt, eine Saugfläche (104), die an einer oberen Oberfläche des Leitschaufelkörpers (101) nach außen abgerundet ist, eine Druckfläche (105), die an einer unteren Oberfläche des Leitschaufelkörpers (201) nach innen abgerundet ist, die erste axiale Sehne (B), die der axialen Länge zwischen der Vorderkante (102) und der Hinterkante (103) entspricht, und den ersten Staffelungswinkel (D), der zwischen der ersten Sehnenlänge (A) und der ersten axialen Sehne (B) gebildet ist, enthält, und
wobei die zweite Hilfsleitschaufel (200a) eine zweite Sehnenlänge (a), die eine kürzeste Länge ist, die von einer Vorderkante (202), die an einem Spitzenendabschnitt eines Leitschaufelkörpers (201) gebildet ist, zu einer Hinterkante (203), die an einem hinteren Endabschnitt des Leitschaufelkörpers (201) gebildet ist, führt, eine Saugfläche (204), die an einer ersten Oberfläche des Leitschaufelkörpers (201) nach außen abgerundet ist, eine Druckfläche (205), die an einer zweiten Oberfläche des Leitschaufelkörpers (201) gegenüber der ersten Oberfläche nach innen abgerundet ist, eine zweite axiale Sehne (b), die der axialen Länge zwischen der Vorderkante (202) und der Hinterkante (203) entspricht, und einen zweiten Staffelungswinkel (d), der zwischen der zweiten Sehnenlänge (a) und der zweiten axialen Sehne (b) gebildet ist, und einen zweiten Staffelungswinkel (d), der zwischen der zweiten Sehnenlänge (a) und der zweiten axialen Sehne (b) gebildet ist, enthält.

8. Vorverwirblungsvorrichtung für eine Gasturbine nach Anspruch 7, wobei die erste Sehnenlänge (A) verlängert ist, so dass sie 1,5 bis 1,56 mal länger als die zweite Sehnenlänge (a) ist.

9. Vorverwirblungsvorrichtung für eine Gasturbine nach einem der Ansprüche 7 bis 8, wobei die zweite axiale Sehne (b) auf eine Länge verlängert ist, die der Hälfte einer Länge der ersten axialen Sehne (B) entspricht.

## Revendications

1. Dispositif de pré-tourbillonnement pour un compresseur d'une turbine à gaz, comportant :
une pluralité de premières pales principales (100) espacées les unes des autres à un intervalle prédéterminé le long d'une direction circonférentielle d'un carter de dispositif de pré-tourbillonnement (10), dans lequel une distance d'espacement entre des bords de fuite (103) de premières pales principales (100) adjacentes est L ; et
une pluralité de premières pales auxiliaires (200) disposées entre la pluralité de premières pales principales (100) espacées les unes des autres et ayant une taille plus petite que celle de la pluralité de premières pales principales (100), dans lequel une première pale auxiliaire (200) de la pluralité de premières pales auxiliaires (200) est positionnée entre chaque paire de premières pales principales (100) adjacentes et dans lequel des bords de fuite (103, 203) des premières pales principales (100) et des premières pales auxiliaires (200) sont sur un même plan axial ;
dans lequel chaque première pale principale (100) de la pluralité de premières pales principales (100) inclut une première longueur de corde (A) qui est une plus courte longueur reliant un bord d'attaque formé sur une partie d'extrémité d'embout d'un corps de pale (101) à un bord de fuite (103) formé sur une partie d'extrémité arrière du corps de pale (101), une surface d'admission (104) arrondie vers l'extérieur sur une première surface du corps de pale (101), une surface de pression (105) arrondie vers l'intérieur sur une seconde surface du corps de pale (101) opposée à la première surface, une première corde axiale (B) étant la longueur axiale entre le bord d'attaque (102) et le bord de fuite (103), et un premier angle de décalage (D) formé entre la première longueur de corde (A) et la première corde axiale (B),
**caractérisé en ce que**, pour chaque première pale auxiliaire (200) positionnée entre la paire de premières pales principales (100) adjacentes, un bord de fuite (203) de la première pale auxiliaire (200) est positionné entre des premières pales principales (100) adjacentes à une position de 3L/5 par rapport au bord de fuite (103) de la première pale principale (100) dirigée vers une surface de pression (205) de la première pale auxiliaire (200).

2. Dispositif de pré-tourbillonnement pour une turbine à gaz selon la revendication 1, dans lequel les pales de la pluralité de premières pales principales (100) sont inclinées dans une direction tangentielle lorsqu'elles sont vues à l'avant du carter de dispositif de pré-tourbillonnement (10).

3. Dispositif de pré-tourbillonnement pour une turbine à gaz selon l'une quelconque des revendications 1 à 2, dans lequel lorsqu'une épaisseur maximale de la pluralité de premières pales principales (100) est Tm, les pales de la pluralité de premières pales auxiliaires (200) sont formées pour avoir une épaisseur maximale de 2Tm/5.

4. Dispositif de pré-tourbillonnement d'une turbine à gaz selon l'une quelconque des revendications 1 à 3, dans lequel une étendue entre la première pluralité de premières pales principales (100) espacées les unes des autres est de 70 mm ou moins.

5. Dispositif de pré-tourbillonnement pour une turbine à gaz selon l'une quelconque des revendications 1 à 4, dans lequel le premier angle de décalage (D) de la pluralité de premières pales principales (100) est maintenu dans une plage de 50° à 60°.

6. Dispositif de pré-tourbillonnement pour une turbine à gaz selon la revendication 1, dans lequel les premières pales principales (200) incluent une seconde longueur de corde (a) qui est une plus courte longueur reliant un bord d'attaque (102) formé sur une partie d'extrémité d'embout d'un corps de pale (101) arrondie pour être aérodynamique, à un bord de fuite (203) formé sur une partie d'extrémité arrière du corps de pale (201), une surface d'admission (204) arrondie vers l'extérieur sur une première surface du corps de pale (201), une surface de pression (205) arrondie vers l'intérieur sur une seconde surface du corps de pale (201) opposée à la première surface, une seconde corde axiale (b) étant la longueur axiale entre le bord d'attaque (202) et le bord de fuite (203), un seconde angle de décalage (d) formé entre la seconde longueur de corde (a) et la seconde corde axiale (b).

7. Dispositif de pré-tourbillonnement pour une turbine à gaz selon la revendication 1, comportant en outre
une seconde pale principale (100) positionnée entre les premières pales principales (100) espacées les unes des autres ; et
une seconde pale auxiliaire (200a) positionnée au voisinage de la seconde pale principale (100) et formée pour avoir une taille plus petite que celle de la seconde pale principale (100),
dans lequel la seconde pale principale (100) inclut la première longueur de corde (A) qui est une plus courte longueur reliant un bord d'attaque (120) formé sur une partie d'extrémité d'embout d'un corps de pale (101) à un bord de fuite (103) formé sur une partie d'extrémité arrière du corps de pale (101), une surface d'admission (104) arrondie vers l'extérieur sur une surface supérieure du corps de pale (101), une surface de pression (105) arrondie vers l'intérieur sur une surface inférieure du corps de pale (201), la première corde axiale (B) étant la longueur axiale entre le bord d'attaque (102) et le bord de fuite (103), et le premier angle de décalage (D) formé entre la première longueur de corde (A) et la première corde axiale (A), et
dans lequel la seconde pale auxiliaire (200a) inclut une seconde longueur de corde (a) qui est une plus courte longueur reliant un bord d'attaque (202) formé sur une partie d'extrémité d'embout d'un corps de pale (201) à un bord de fuite (203) formé sur une partie d'extrémité arrière du corps de pale (201), une surface d'admission (204) arrondie vers l'extérieur sur une première surface du corps de pale (201), une surface de pression (205) arrondie vers l'intérieur sur une seconde surface du corps de pale (201) opposée à la première surface, une seconde corde axiale (b) étant la longueur axiale entre le bord d'attaque (202) et le bord de fuite (203), et un second angle de décalage (d) formé entre la seconde longueur de corde (a) et la seconde corde axiale (b).

8. Dispositif de pré-tourbillonnement pour une turbine à gaz selon la revendication 7, dans lequel la première longueur de corde (A) s'étend pour être 1,5 à 1,56 fois plus longue que la seconde longueur de corde (a).

9. Dispositif de pré-tourbillonnement pour une turbine à gaz selon l'une quelconque des revendications 7 à 8, dans lequel la seconde corde axiale (b) s'étend sur une longueur correspondant à une moitié d'une longueur de la première corde axiale (B).
